# EUROPEAN PATENT SPECIFICATION

(11) **EP 2 023 195 B1**
(45) Date of publication and mention of the grant of the patent: **05.04.2017**
(21) Application number: 08012877.0
(22) Date of filing: 16.07.2008
(51) Int. Cl.: G02F 1/1345, G02F 1/1362

(54) **Liquid crystal display device**
Flüssigkristallanzeigevorrichtung
Dispositif d'affichage à cristaux liquides

(30) Priority: 09.08.2007 KR 20070080355; 09.08.2007 KR 20070080354
(43) Date of publication of application: 11.02.2009
(73) Proprietor: LG Display Co., Ltd., Seoul 07336 (KR)
(72) Inventor: Lee, Jae Kyun, Suwon-si Gyeonggi-do (KR); Oh, Kum Mi, Seodaemun-gu Seoul (KR); Oh, Jae Young, Yeongdeungpo-gu Seoul (KR); Shin, Dong Su, Anyang-si Gyeonggi-do (KR)
(74) Representative: Ter Meer Steinmeister & Partner

(56) References cited:
- US-A1- 2003 133 066
- US-A1- 2003 227 590
- US-A1- 2004 195 574
- US-A1- 2005 211 986
- US-A1- 2006 001 789

## Description

This application claims the benefit of the Korean Patent Application No. P2007-080354, filed on August 9, 2007, and of the Korean Patent Application No. P2007-080355, filed on August 9, 2007

### BACKGROUND OF THE INVENTION

### Field of the Invention

The present invention relates to a liquid crystal display device, and more particularly, to a liquid crystal display device, which can achieve uniform common voltage distribution within a display panel, resulting in enhanced display quality.

### Discussion of the Related Art

With growth of an information society, there is a demand for development of a novel image display device capable of solving drawbacks of a conventional Cathode Ray Tube (CRT) such as weight and volume thereof. Therefore, a variety of flat panel display devices, including Liquid Crystal Display (LCD) devices, Organic Light Emitting Diodes (OLEDs), Plasma Panel Display (PDP) devices, Surface-conduction Electron-emitter Display (SED) devices, etc., have attracted considerable attention.

Of the above-mentioned display devices, the most representative display device is an LCD device, which has been widely used from a large-scale TV screen to a small display screen of a mobile phone.

Such an LCD device is configured in such a manner that a liquid crystal material, exhibiting dielectric anisotropy and refractive index anisotropy, is arranged between two electrodes. After an electric field is generated between the two electrodes, strength of the electric field is adjusted to control transmission of light, whereby a desired display image can be realized.

That is, the LCD device is not a self-illuminating type display device capable of emitting light by itself, but a light-receiving type display device designed to realize an image upon receiving light from a light source situated therein.

Generally, the LCD device receives white light from the light source situated therein, and realizes color images using three colors of red, green and blue.

In the above-described configuration of the LCD device, the two electrodes, used to drive liquid crystals, generally include a pixel electrode and a common electrode, which are connected to a thin film transistor, the pixel electrode receiving a voltage corresponding to an image signal, and the common electrode receiving a common voltage. The liquid crystals can be driven by an electric field generated between the two electrodes.

However, the above-described conventional LCD device has the following problems.

Firstly, a common line, which serves to supply a common voltage to a panel of the LCD device, is horizontally formed, and only one or two input terminals to apply the common voltage to the common line are present.

Therefore, achieving uniform common voltage distribution in a large-scale panel is difficult due to a resistance in the common line, etc. This deteriorates image quality, and may cause afterimages, etc. In particular, in the case of a model for use in televisions, it has a longer horizontal length than a vertical length and therefore, suffers from an increased resistance of the common line. Accordingly, there is a high likelihood of wire breakage and crosstalk.

US 2006/001789 A1 describes a liquid crystal display device and fabricating method thereof including gate and data lines defining a plurality of pixel regions, TFTs for switching a data signal to the pixel electrodes connected to the TFTs respectively, a plurality of the first common lines parallel to gate lines and second common lines parallel to the data lines, which are connected to each other.

US 2003/133066 A1 describes a liquid crystal display device including at least a common electrode line, a common electrode and a pixel electrode in each pixels, the common electrode line comprising a first common electrode line which extends in the extending direction of the gate lines and a second common electrode line which extends in the extending direction of the drain lines in the pixel region, the first common electrode line and the second common electrode line are spaced apart from each other by way of a first insulating film, the first common electrode line and the second common electrode line are connected via an opening portion formed in the first insulating film, and a second insulating film is formed over the opening portion.

US 2005/211986 A1 describes a liquid crystal display device that includes a TFT substrate. A plurality of gate lines and a plurality of common lines extend in a first direction on the TFT substrate. Drain lines extend in a second direction substantially perpendicularly to these lines. Bus lines are located outside a display area and are extending parallel to the drain lines. Common line terminals are provided on either side of each block that is constituted by a predetermined number of gate terminals and drain terminals, respectively.

US 2004/0195574 A1 describes a liquid crystal display having an applied horizontal electric field comprising: a gate line; a common line substantially parallel to the gate line; a data line arranged to cross the gate line and the common line to define a pixel area; a thin film transistor formed at each crossing of the gate line and the data line; a common electrode formed in the pixel area and connected to the common line; a pixel electrode connected to the thin film transistor, wherein the horizontal electric field is formed between the pixel electrode and the common electrode in the pixel area; a gate pad formed with at least one conductive layer included in the gate line; a data pad formed with at least one conductive layer included in the data line; a common pad formed with at least one conductive layer included in the common line; a passivation film to expose at least one of the gate pad, the data pad and the common pad; and a driving integrated circuit mounted on a substrate to connect directly to one of the gate pad and the data pad.

### SUMMARY OF THE INVENTION

Accordingly, the present invention is directed to a liquid crystal display device that substantially obviates one or more problems due to limitations and disadvantages of the related art.

An object of the present invention is to provide a liquid crystal display device having uniform common voltage distribution within a liquid crystal display panel.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The object is solved by the features of the independent claims.

The liquid crystal display device may further comprise: a plurality of data pad portions on the non-display area, each data pad portion including data pad lines and common pad lines; first data driver ICs connected to the respective data pad portions except for opposite end data pad portions; second data driver ICs connected to the opposite end data pad portions; and a plurality of first common voltage input terminals provided in at least one of the first data driver ICs for supplying a common voltage to each second common line via the common pad lines.

The liquid crystal display device may further comprise a common voltage delay restrictor for supplying common voltage control signals to the first and second common lines so as to prevent a common voltage delay phenomenon.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a plan view illustrating a liquid crystal display device according to a first embodiment of the present invention;
FIG. 2 is a plan view illustrating a data driver IC;
FIG. 3 is a plan view illustrating an in-plane switching mode liquid crystal display device according to the first embodiment of the present invention;
FIG. 4 is a plan view illustrating a liquid crystal display device according to a second embodiment of the present invention;
FIG. 5 is a plan view illustrating a liquid crystal display device according to a third embodiment of the present invention;
FIG. 6 is a sectional view of the liquid crystal display device according to the third embodiment of the present invention, illustrating a region where a data line and a second common line connecting pattern overlap each other;
FIG. 7 is a plan view of the liquid crystal display device according to the third embodiment of the present invention, illustrating line widths of overlapped portions of a data line and a second common line connecting pattern;
FIG. 8 is a plan view illustrating a liquid crystal display device according to a fourth embodiment of the present invention;
FIG. 9 is an enlarged plan view of the liquid crystal display device according to the fourth embodiment of the present invention;
FIG. 10 is a plan view illustrating a liquid crystal display device according to a fifth embodiment of the present invention;
FIG. 11 is a plan view illustrating a liquid crystal display device according to a sixth embodiment of the present invention;
FIG. 12 is a plan view illustrating a dual layer configuration of a third common line connecting pattern in the liquid crystal display devices according to the fifth and sixth embodiments of the present invention;
FIG. 13 is a plan view illustrating a liquid crystal display device according to a seventh embodiment of the present invention;
FIG. 14 is a plan view illustrating a liquid crystal display device according to an eighth embodiment of the present invention;
FIG. 15 is a plan view illustrating a liquid crystal display device according to a ninth embodiment of the present invention;
FIG. 16 is a plan view illustrating a liquid crystal display device according to a tenth embodiment of the present invention;
FIG. 17 is a plan view illustrating a liquid crystal display device according to an eleventh embodiment of the present invention;
FIG. 18 is a plan view illustrating a liquid crystal display device according to a twelfth embodiment of the present invention;
FIG. 19 is a plan view illustrating a liquid crystal display device according to a thirteenth embodiment of the present invention;
FIG. 20A is a view illustrating common voltage distribution within a display panel of a conventional liquid crystal display device; and
FIG. 20B is a view illustrating common voltage distribution within a display panel of the liquid crystal display device according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a liquid crystal display device according to the present invention will be described in more detail with reference to the accompanying drawings.

### First Embodiment

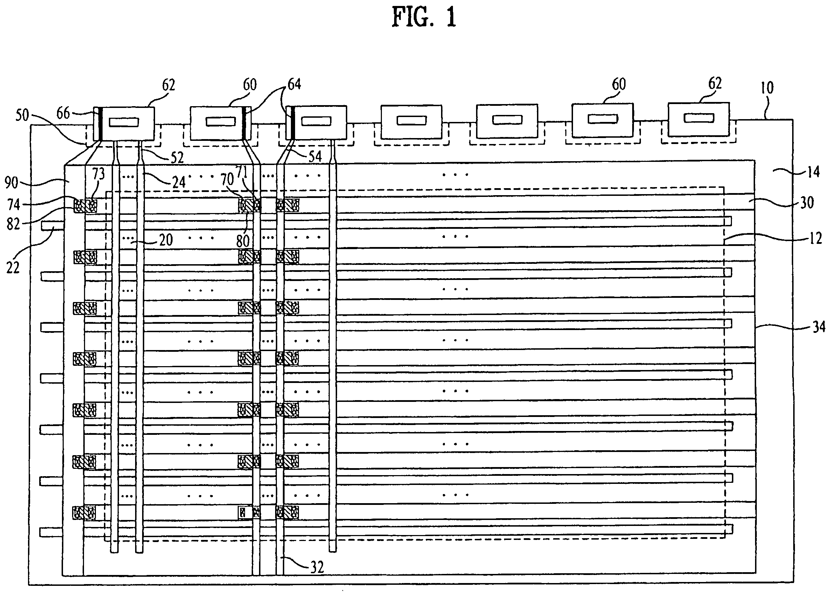

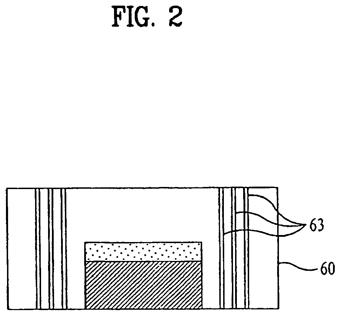

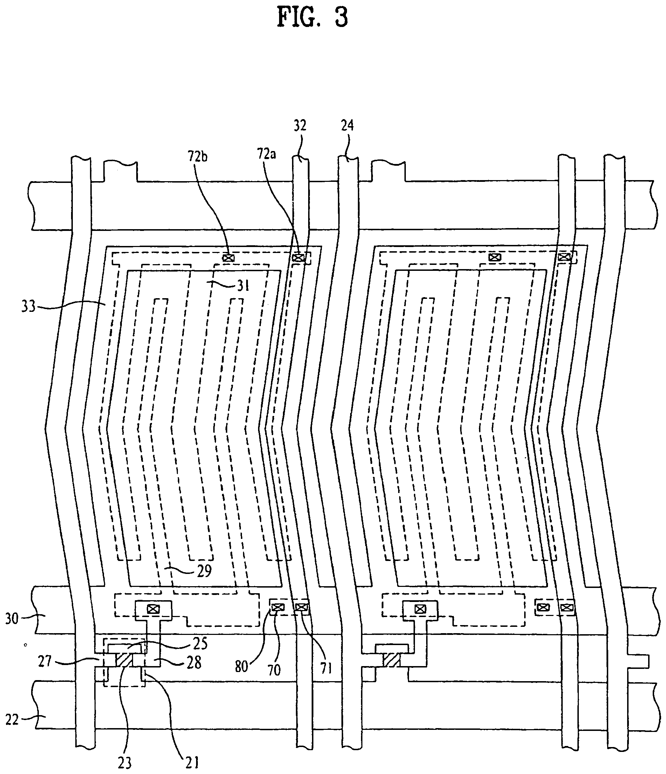

FIG. 1 is a plan view illustrating a liquid crystal display device according to a first embodiment of the present invention, FIG. 2 is a plan view illustrating a data driver IC, and FIG. 3 is a plan view illustrating an In-Plane Switching (IPS) mode liquid crystal display device according to the first embodiment of the present invention.

The liquid crystal display device according to the first embodiment of the present invention, as shown in FIG. 1, includes a display panel 10 consisting of a display area 12 and a non-display area 14 surrounding the display area 12, a plurality of gate lines 22 and data lines 24 formed on the display area 12 to intersect each other to thereby define a plurality of pixel regions 20, a plurality of thin film transistors 21 formed at respective intersections of the gate lines 22 and the data lines 24, a plurality of pixel electrodes formed on the pixel regions and connected to the respective thin film transistors, a plurality of first common lines 30 formed parallel to the respective gate lines 22, a plurality of second common lines 32 formed parallel to the respective data lines 24 to intersect the first common lines 30, a plurality of data pad portions 50 formed in the non-display area 14 and each constituted by a collection of pad lines including data pad lines 52 and common pad lines 54, a plurality of first data driver ICs 60 connected to the respective data pad portions 50 except for two opposite end data pad portions, and two second data driver ICs 62 connected to the two opposite end data pad portions 50.

Of the plurality of first data driver ICs 60, at least one first data driver IC 60 is provided with first common voltage input terminal 64 to supply a common voltage to each second common line 32.

For reference, in the following description, the same reference numerals will be used to refer to the same or like parts.

The display panel 10 includes two transparent substrates bonded to face each other, between which a liquid crystal layer is interposed.

Scan signals are sequentially supplied to the display panel 10 through the gate lines 22.

The plurality of data lines 24 and the plurality of gate lines 22 intersect each other with a gate insulating film (not shown) being interposed therebetween, defining the plurality of pixel regions 20. Data signals are supplied to the display panel 10 through the data lines 24.

The plurality of pixel regions 20 is arranged, in a matrix, within the display area 12. Each pixel region, for example, is adapted to correspond to any one of red, green and blue.

As shown in FIG. 3, each thin-film transistor 21 includes a gate electrode 25 branched from the associated gate line 22, a semiconductor layer 23 formed on top of the gate electrode 25, a source electrode 27 branched from the associated data line 24 and located on top of one end of the semiconductor layer 23, and a drain electrode 28 formed opposite the source electrode 27.

Each pixel electrode 29 formed on the pixel region 20 is connected to the drain electrode 28. Preferably, the pixel electrode 29 is made of, for example, a transparent conductive layer such as Indium Tin Oxide (ITO), Indium Zinc Oxide, or the like.

The thin film transistor is turned On/Off by the scan signal supplied via the gate line. If the thin film transistor is turned on, the data signal is applied to the pixel electrode.

The first common lines 30 and the gate lines 22 are arranged in parallel and are formed of the same layer. The second common lines 32 and the data lines 24 are arranged in parallel and are formed of the same layer. The first common lines 30 and the second common lines 32 intersect each other with the gate insulating film (not shown) being interposed therebetween.

The first common lines 30 and the second common lines 32 are electrically connected to each other and are adapted to stably supply the common voltage to the entire liquid crystal display panel 10. Specifically, the common voltage, input from the exterior, is supplied to the liquid crystal display panel 10 via the first common lines 30 and the second common lines 32. For example, the first common lines 30 and the second common lines 32 are electrically connected to each other by first connecting patterns 80, each of which is patterned to cover both a first contact hole 70 exposing a part of the first common line 30 and a second contact hole 71 exposing a part of the second common line 32. Preferably, the first connecting patterns 80 are formed of the same layer as the pixel electrode 29.

The reason why the first common lines 30 and the second common lines 32 are connected to each other via the first connecting patterns 80 rather than being directly connected to each other is to prevent addition of a process. Generally, after the thin film transistors are formed and a protective film is deposited over the entire surface of the display panel 10, contact holes are formed in the drain electrodes of the thin film transistors and the pixel electrodes are formed so as to be electrically connected to the drain electrodes through the contact holes. Accordingly, as the first and second contact holes 70 and 71 are formed upon formation of the contact holes in the drain electrodes, and the first connecting patterns 80 are formed upon patterning of the pixel electrodes, there is no additional process.

The plurality of data pad portions 50 include the plurality of data pad lines 52 connected at one end thereof to the data lines 24 to supply data signals to the data lines 24. The data pad portions 50 may further include the plurality of common pad lines 54 electrically connected at one end thereof to the second common lines 32 to supply the common voltage to the second common lines 32.

All the data pad lines 52 and the common pad lines 54 are formed of the same layer as the data lines 24. Specifically, the second common lines 32 are integrally formed with the respective common pad lines 54, and the data pad lines 52 are integrally formed with the respective data lines 24.

The first data driver ICs 60 are mounted, respectively, on the plurality of data pad portions 50 except for the two opposite end data pad portions, and the second data driver ICs 62 are mounted on the two opposite end data pad portions 50.

At least one of the first data driver ICs 60 has the first common voltage input terminal 64, to which the common voltage is applied. The first common voltage input terminal 64 is connected to the common pad line 54 to input the common voltage to each second common line 32.

At least one of the second data driver ICs 62 has a second common voltage input terminal 66 to input the common voltage, too. The second common voltage input terminal 66 is provided at the second data driver IC 62 such that it is connected to a first common line connecting pattern 90. The first common line connecting pattern 90 serves to electrically connect the plurality of first common lines 30 with one another.

The first common line connecting pattern 90, as shown in FIG. 1, may be provided at the left side and/or right side of the liquid crystal display panel 10. Also, the first common line connecting pattern 90 may be formed of the same layer as the data lines 24. In this case, the first common line connecting pattern 90 is electrically connected to the first common lines 30 by second connecting patterns 82, each of which is patterned to cover both a contact hole 73 exposing a part of the first common line 30 and a contact hole 74 exposing a part of the first common line connecting pattern 90. Preferably, the second connecting patterns 82 are formed of the same layer as the pixel electrodes 29.

As described above, the liquid crystal display device according to the first embodiment of the present invention supplies the common voltage via the second common lines arranged parallel to the data lines, enabling more uniform supply of the common voltage over the entire display panel.

An in-plane switching mode liquid crystal display device according to the first embodiment of the present invention, as shown in FIG. 3, includes the first connecting patterns 80, each of which is patterned to cover both the first contact hole 70 exposing a part of the first common line 30 and the second contact hole 71 exposing a part of the second common line 32.

The pixel electrodes 29 are formed on the respective pixel regions 20 and are electrically connected to the drain electrodes 28 of the thin film transistors 21. Common electrodes 31 are formed between the pixel electrodes 29. Both the common electrodes 31 and the pixel electrodes 29 are formed of the same layer.

The common electrodes 31 are electrically connected to common line branches 33 branched from the first common lines 33 to the pixel regions via contact holes 72b. The common electrodes 31 are also connected to the second common lines 32 via third contact holes 72a. That is, the first common lines 30 and the second common lines 32 can be electrically connected to each other via the common electrodes 31.

### Second Embodiment

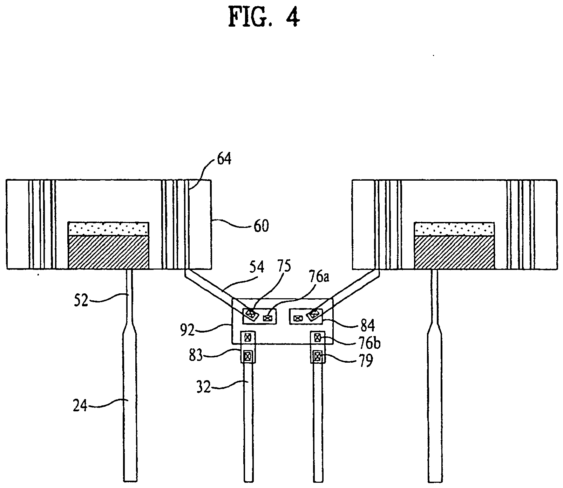

FIG. 4 is a plan view illustrating an important part of a liquid crystal display device according to a second embodiment of the present invention.

In the first embodiment of the present invention, the common voltage supplied from the exterior is individually applied to each of the second common lines 32. Therefore, when the common voltage supplied from the exterior fluctuates, there is a likelihood of uneven supply of the common voltage.

For this reason, in the second embodiment of the present invention, at least one second common line connecting pattern 92 having an island shape is formed in the non-display area 14 between the data pad portions 50 and the display area 12. To assure uniform supply of the common voltage supplied via the first common voltage input terminals 64 of the neighboring data driver ICs 60, the at least two neighboring second common lines 32 and the at least two neighboring common pad lines 54 are connected to the second common line connecting pattern 92.

In FIG. 4, the common pad lines 54 and the second common lines 32 are formed of the same layer as the data line 24, and the second common line connecting pattern 92 is formed of the same layer as the gate lines 22.

A contact hole 79 exposing a part of the second common line 32 and a contact hole 76b exposing a part of the second common line connecting pattern 92 are formed. Also, a contact hole 75 exposing a part of the common pad line 54 and a contact hole 76a exposing a part of the second common line connecting pattern 92 are formed. Then, third and fourth connecting patterns 83 and 84 are formed over the contact holes, to connect the second common line 32, the second common line connecting pattern 92 and the common pad line 54 to one another.

Specifically, each second common line 32 and the second common line connecting pattern 92 are electrically connected to each other by the third connecting pattern 83 through the contact holes 79 and 76b. Each common pad line 54 and the second common line connecting pattern 92 are electrically connected to each other by the fourth connecting pattern 84 through the contact holes 75 and 76b.

The reason why the common pad line 54 and the second common line 32 are electrically connected to the second common line connecting pattern 92 by the connecting patterns 83 and 84 rather than being directly connected to each other is to prevent addition of a process. Generally, after the thin film transistors are formed and a protective film is deposited over the entire surface of the display panel 10, contact holes are formed in the drain electrodes of the thin film transistors and the pixel electrodes are formed so as to be electrically connected to the drain electrodes through the contact holes. With this procedure, the contact holes are formed after formation of the data lines. To electrically connect the common pad lines 54 and the second common lines 32 to the second common line connecting pattern 92, the contact holes must be formed prior to forming the common pad line 54 and the second common line 32.

Preferably, the third and fourth connecting patterns 83 and 84 are formed of the same layer as the pixel electrodes 29.

In the liquid crystal display device according to the second embodiment of the present invention, as shown in FIG. 4, the single second common line connecting pattern 92 is electrically connected to all the common pad lines provided in the neighboring data pad portions 50. In conclusion, the first common voltage input terminals 64 provided in the respective data driver ICs 60 are electrically connected to the second common line connecting pattern 92.

The second common line connecting pattern 92 takes the form of an island arranged in a gap between the neighboring data driver ICs 60 and therefore, the second common line connecting pattern 92 does not overlap the adjacent data lines 24. This can reduce a parasitic capacitance occurring between the second common line connecting pattern 92 and the data lines 24 and therefore, can prevent uneven common voltage distribution due to an RC delay phenomenon.

A description of the liquid crystal display device according to the second embodiment of the present invention except for the common pad line, the data line and the second common line is identical to that of the liquid crystal display device according to the first embodiment of the present invention and thus, is replaced by the related description of the first embodiment.

### Third Embodiment

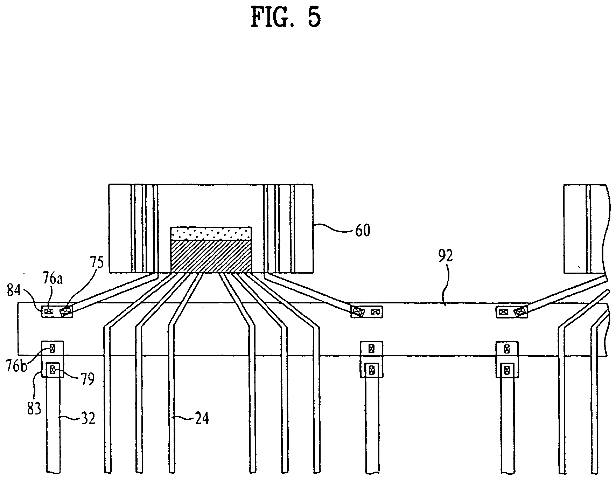

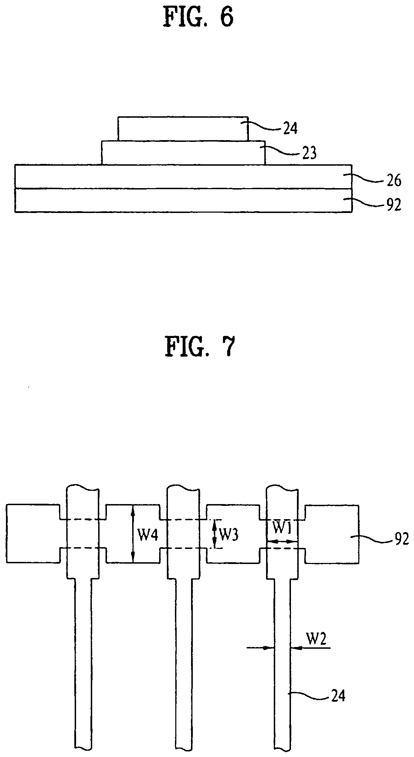

FIG. 5 is a plan view illustrating an important part of a liquid crystal display device according to a third embodiment of the present invention, FIG. 6 is a sectional view of the liquid crystal display device according to the third embodiment of the present invention, illustrating a region where the data line and the second common line connecting pattern overlap each other, and FIG. 7 is a plan view of the liquid crystal display device according to the third embodiment of the present invention, illustrating line widths of overlapped portions of the data line and the second common line connecting pattern.

In the liquid crystal display device according to the third embodiment of the present invention, as shown in FIG. 5, the second common line connecting pattern 92 is formed to have an integral structure in the non-display area 14 between the data pad portions 50 and the display area 12, and has the effect of compensating for a minute difference in the common voltage supplied via the respective first common voltage input terminals 64 and the second common voltage input terminals 66.

A description of the liquid crystal display device according to the third embodiment of the present invention except for the second common line connecting pattern 92, the data line and the second common line connecting pattern is identical to that of the liquid crystal display device according to the second embodiment of the present invention and thus, is replaced by the related description of the second embodiment.

In the liquid crystal display device according to the third embodiment of the present invention, as shown in FIG. 6, a region where the second common line connecting pattern 92 and the data line 24 overlap each other is preferably provided with a semiconductor layer 23 such that the semiconductor layer 23 is interposed between the data line 24 and the second common line connecting pattern 92.

Although not described, reference numeral 26 refers to a gate insulating film.

If the semiconductor layer 23 is interposed between the data line 24 and the second common line connecting pattern 92, the semiconductor layer 23 serves as an insulator, whereby a parasitic capacitance between the second common line connecting pattern 92, to which the common voltage is supplied, and the data line 24 to which the data signal is supplied, can be reduced and consequently, uneven common voltage distribution due to the delay phenomenon can be prevented.

As shown in FIG. 6, when the data line 24 and the semiconductor layer 23 are etched simultaneously, the semiconductor layer 23 is exposed by a larger width than the data line 24 according to a difference in etching rate. This has the effect of preventing wire breakage in the data line 24 due to rapid height variation.

The semiconductor layer 23 is formed of the same layer as the semiconductor layer of the thin film transistor.

In the liquid crystal display device according to the third embodiment of the present invention, as shown in FIG. 7, overlapped portions of the data line 24 and the second common line connecting pattern 92 have different line widths from the remaining portions of the data line 24 and the second common line connecting pattern 92. This has the effect of preventing uneven common voltage distribution due to the delay phenomenon.

Specifically, the portion of the data line 24, overlapped with the second common line connecting pattern 92, has a greater width W1 than a width W2 of the remaining portion of the data line 24. On the other hand, the portion of the second common line connecting portion 92, overlapped with the data line 24, has a smaller width W3 than a width W4 of the remaining portion of the second common line connecting portion 92.

With this configuration, a line resistance in the data line 24 is reduced and consequently, a parasitic capacitance between the data line 24 and the second common line connecting pattern 92 is reduced, whereby uneven common voltage distribution due to the delay phenomenon can be substantially prevented.

### Fourth Embodiment

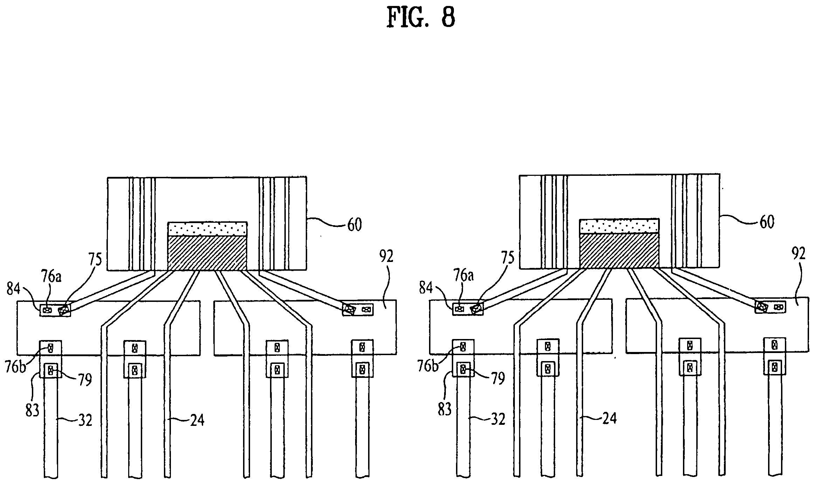

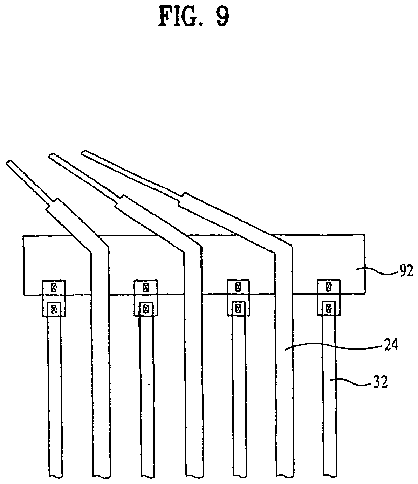

FIG. 8 is a plan view illustrating an important part of a liquid crystal display device according to a fourth embodiment of the present invention, and FIG. 9 is an enlarged plan view of the liquid crystal display device according to the fourth embodiment of the present invention.

The liquid crystal display device according to the fourth embodiment of the present invention, as shown in FIG. 8, includes a plurality of the second common line connecting patterns 92, which are separated from one another, and the common voltage can be input via each first data driver IC individually. Specifically, at least two second common line connecting patterns 92 can be connected, separately, to a single data driver IC.

If the individual input of the common voltage is possible as described above, more efficient circuit tuning is also possible.

In the liquid crystal display device according to the fourth embodiment of the present invention, as shown in FIG. 9, the second common lines 32 and the data lines 24 can be alternately arranged. Such alternate arrangement of the data lines 24 and the second common lines 32 has the effect of producing a symmetrical electric field within the display panel. Accordingly, the entire pattern is symmetrical and thus, the electric field can be more uniformly distributed throughout the display panel.

Although not shown, a description of the liquid crystal display device according to the fourth embodiment of the present invention except for the second common line, the data line and the second common line connecting pattern is identical to that of the liquid crystal display device according to the second embodiment of the present invention and thus, is replaced by the related description of the second embodiment.

### Fifth Embodiment

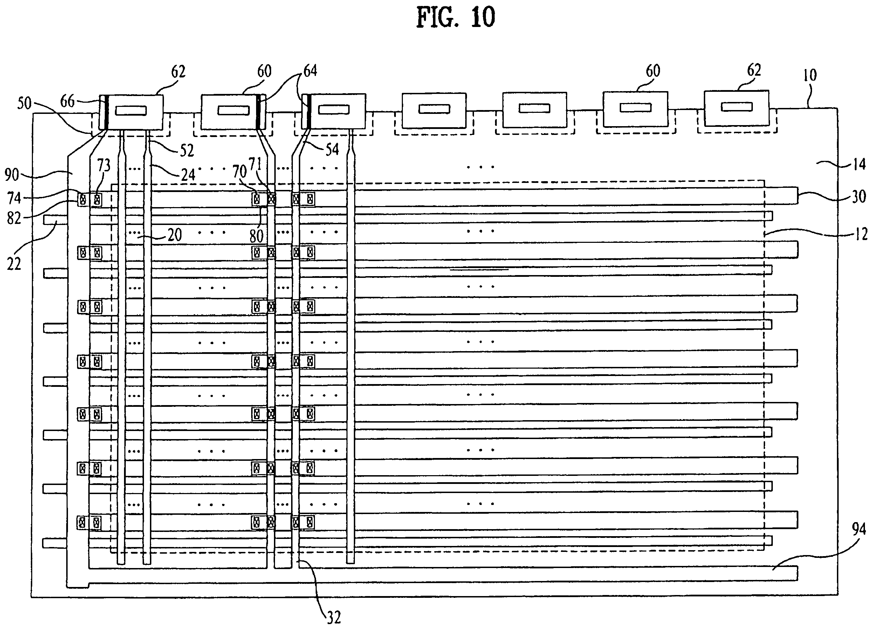

FIG. 10 is a plan view illustrating a liquid crystal display device according to a fifth embodiment of the present invention.

The liquid crystal display device according to the fifth embodiment of the present invention, as shown in FIG. 10, further includes a third common line connecting pattern 94, which is formed in the non-display area 14 at an opposite side of the data pad portions 50 and is used to electrically connect the second common lines 32 to one another. Accordingly, more uniform common voltage distribution within the display panel can be accomplished.

Preferably, the third common line connecting pattern 94 is formed of the same layer as the second common lines 32. That is, both the third common line connecting pattern 94 and the second common lines 32 are formed of the same line as the data lines 24.

### Sixth Embodiment

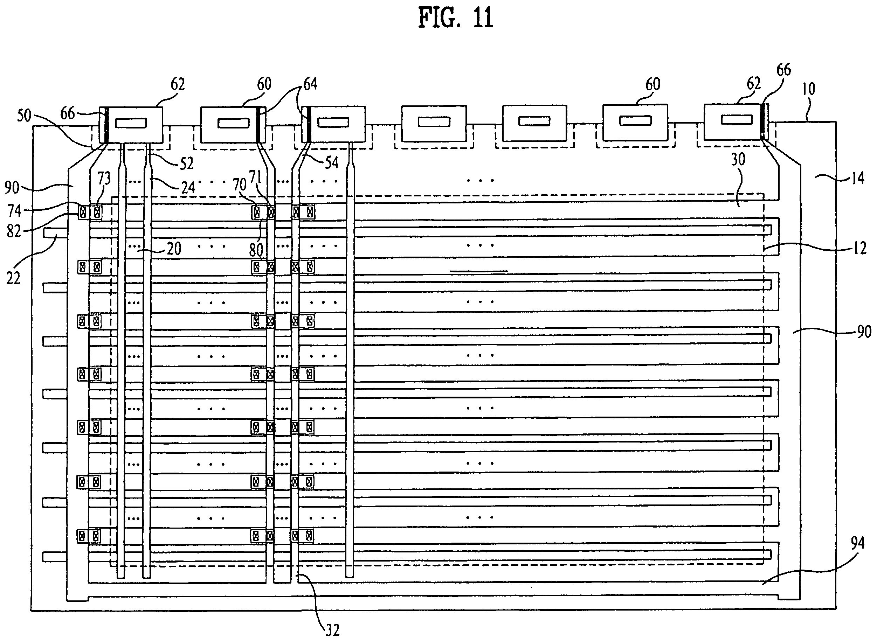

FIG. 11 is a plan view illustrating a liquid crystal display device according to a sixth embodiment of the present invention.

As shown in FIG. 11, there are provided the third common line connecting pattern 94, which is located in the non-display area 14 at the opposite side of the data pad portions 50 and is used to electrically connect the second common lines 32 to one another, and a pair of the first common line connecting patterns 90, which are formed at left and right sides of the display panel, respectively. Provision of both the third common line connecting pattern 94 and the first common line connecting patterns 90 accomplishes more uniform common voltage distribution.

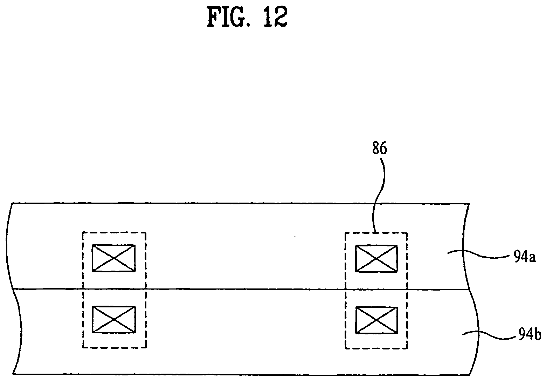

The third common line connecting pattern 94, as shown in FIG. 12, may have a dual layer configuration consisting of a first pattern 94a formed of the same layer as the data lines, and a second pattern 94b formed of the same layer as the gate lines.

Although not shown, a protective insulating film is interposed between the first pattern 94a and the second pattern 94b.

The first pattern 94a and the second pattern 94b are electrically connected to each other by a fifth connecting pattern 86, which is patterned to cover a contact hole 77 exposing a part of the first pattern 94a and a contact hole 78 exposing a part of the second pattern 94b.

Preferably, a plurality of the contact holes 77 and 78 and a plurality of the fifth connecting patterns 86 are provided, to obtain a multi-contact structure.

The dual layer configuration of the third common line connecting pattern 94 causes a further reduction in resistance, resulting in more uniform common voltage distribution.

### Seventh Embodiment

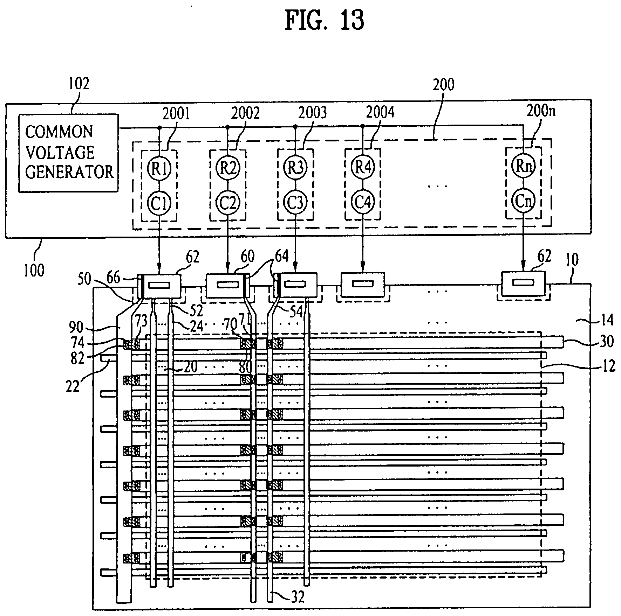

FIG. 13 is a plan view illustrating the configuration of a liquid crystal display device according to a seventh embodiment of the present invention.

As shown in FIG. 13, the liquid crystal display device according to the seventh embodiment of the present invention, as compared to the previously described liquid crystal display device according to the first embodiment of the present invention shown in FIG. 1, further includes a common voltage generator 102 to generate a common voltage, and a common voltage delay restrictor 200 to prevent a common voltage delay phenomenon. Other configurations of the present embodiment are identical to those of the first embodiment and thus, the following description focuses upon the common voltage generator 102 and the common voltage delay restrictor 200.

The common voltage generator 102 and the common voltage delay restrictor 200 may be mounted on a Printed Circuit Board (PCB).

The common voltage delay restrictor 200 includes a plurality of delay preventing patterns 2001 to 200n to prevent the common voltage delay phenomenon. The plurality of delay preventing patterns 2001 to 200n correspond to the first and second data driver ICs 60 and 62, respectively. For example, there are provided the first to n^{th} delay preventing patterns 2001 to 200n. The first to n^{th} delay preventing patterns 2001 to 200n individually supply common voltage control signals, generated on the basis of a common voltage delay rate, to the respective first and second data driver ICs 60 and 62. More specifically, the first to n^{th} delay preventing patterns 2001 to 200n generate the common voltage control signals, in consideration of a signal delay rate depending on an increased area of the display panel 10 or a signal delay rate depending on an increased length of supply lines connected to the common voltage generator 102. For this, the first to n^{th} delay preventing patterns 2001 to 200n include resistors R1 and Rn and capacitors C1 to Cn, respectively. Namely, the delay rate can be adjusted according to values of the resistors R1 to Rn and the capacitors C1 to Cn included in the respective first to n^{th} delay preventing patterns 2001 to 200n.

More specifically, the values of the resistors R1 to Rn and the capacitors C1 to Cn provided in the first to n^{th} delay preventing patterns 2001 to 200n must decrease from the first delay preventing pattern 2001 toward the n^{th} delay preventing pattern 200n. In other words, the values of the resistors R1 to Rn and the capacitors C1 to Cn provided in the first to n^{th} delay preventing patterns 2001 to 200n decrease as a common voltage delay rate increases. This is represented by the following Equation:

R1C1 > R2C2 > R3C3... > RnCn.

Values of the resistors R1 to Rn and the capacitors C1 to Cn of the respective first to n^{th} delay preventing patterns 2001 to 200n are calculated using the above Equation. Accordingly, the first to n^{th} delay preventing patterns 2001 to 200n can individually supply the common voltage control signals depending on the common voltage delay rate to the first and second data driver ICs 60 and 62, supplying a uniform common voltage to the display panel 10.

### Eighth Embodiment

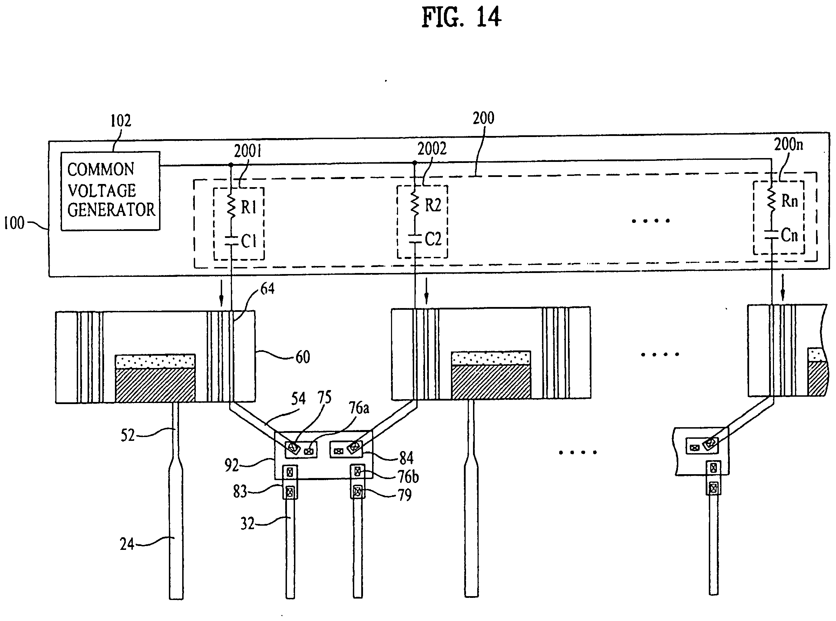

FIG. 14 is a plan view illustrating an important part of a liquid crystal display device according to an eighth embodiment of the present invention.

As shown in FIG. 14, the liquid crystal display device according to the eighth embodiment of the present invention, as compared to the previously described liquid crystal display device according to the second embodiment of the present invention shown in FIG. 4, further includes the common voltage generator 102 to generate a common voltage, and the common voltage delay restrictor 200 to prevent a common voltage delay phenomenon. Other configurations of the present embodiment are identical to those of the second embodiment and thus, the following description focuses upon the common voltage generator 102 and the common voltage delay restrictor 200.

The common voltage delay restrictor 200 includes the plurality of delay preventing patterns 2001 to 200n. For example, there are provided the first to n^{th} delay preventing patterns 2001 to 200n. The first to n^{th} delay preventing patterns 2001 to 200n are connected individually to the first and second data driver ICs 60 and 62, to supply common voltage control signals to the respective first and second data driver ICs 60 and 62. More specifically, to apply the common voltage control signals from the first to n^{th} delay preventing patterns 2001 to 200n, output lines of the first to n^{th} delay preventing patterns 2001 to 200n are connected to the common voltage input terminals 64 and 66 provided in the respective data driver ICs 60 and 62.

### Ninth Embodiment

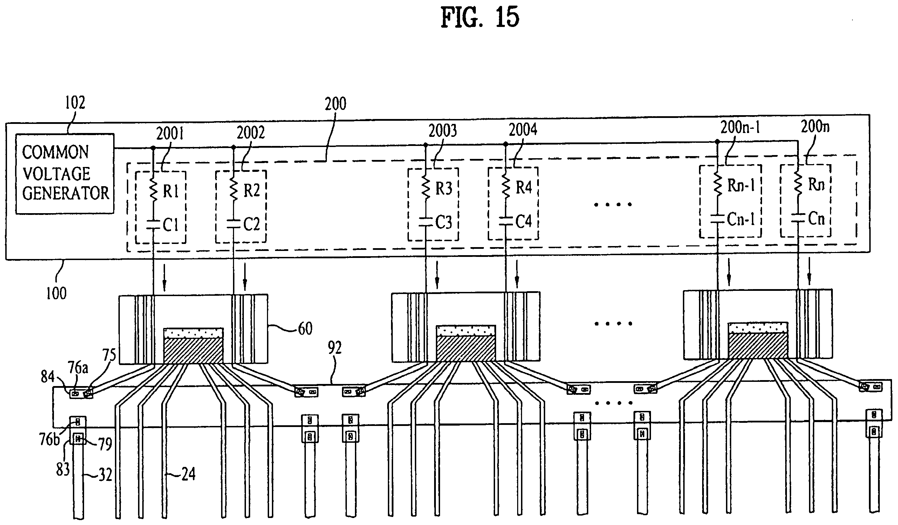

FIG. 15 is a plan view illustrating an important part of a liquid crystal display device according to a ninth embodiment of the present invention.

As shown in FIG. 15, the liquid crystal display device according to the ninth embodiment of the present invention, as compared to the previously described liquid crystal display device according to the third embodiment of the present invention shown in FIG. 5, further includes the common voltage generator 102 to generate a common voltage, and the common voltage delay restrictor 200 to prevent a common voltage delay phenomenon. Other configurations of the present embodiment are identical to those of the third embodiment and thus, the following description focuses upon the common voltage generator 102 and the common voltage delay restrictor 200.

The common voltage delay restrictor 200 includes the plurality of delay preventing patterns 2001 to 200n. For example, there are provided the first to n^{th} delay preventing patterns 2001 to 200n. At least one of the plurality of delay preventing patterns 2001 to 200n is connected to the respective first and second data driver ICs 60 and 62, to supply at least one common voltage control signal to the respective data driver ICs 60 and 62.

### Tenth Embodiment

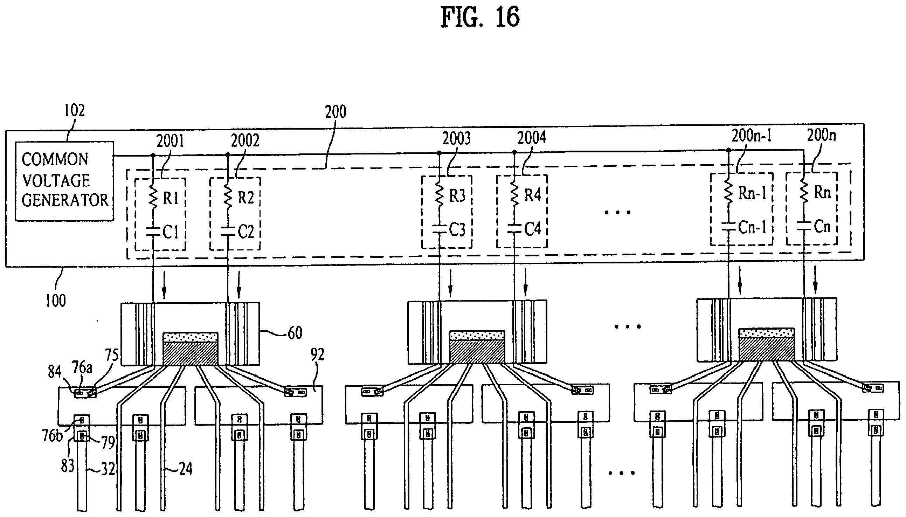

FIG. 16 is a plan view illustrating an important part of a liquid crystal display device according to a tenth embodiment of the present invention.

As shown in FIG. 16, the liquid crystal display device according to the tenth embodiment of the present invention, as compared to the previously described liquid crystal display device according to the fourth embodiment of the present invention shown in FIG. 8, further includes the common voltage generator 102 to generate a common voltage, and the common voltage delay restrictor 200 to prevent a common voltage delay phenomenon. Other configurations of the present embodiment are identical to those of the fourth embodiment and thus, the following description focuses upon the common voltage generator 102 and the common voltage delay restrictor 200.

The common voltage delay restrictor 200 includes the plurality of delay preventing patterns 2001 to 200n. For example, there are provided the first to n^{th} delay preventing patterns 2001 to 200n. At least one of the plurality of delay preventing patterns 2001 to 200n is connected to the respective first and second data driver ICs 60 and 62, to supply at least one common voltage control signal to the respective data driver ICs 60 and 62.

### Eleventh Embodiment

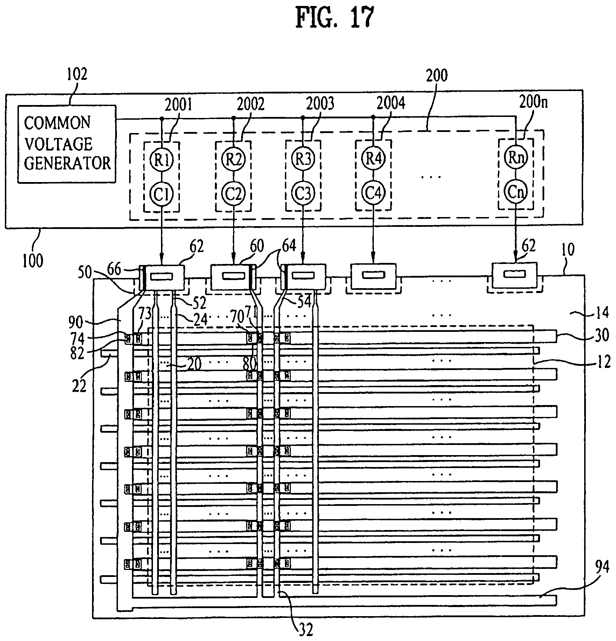

FIG. 17 is a plan view illustrating an important part of a liquid crystal display device according to an eleventh embodiment of the present invention.

As shown in FIG. 17, the liquid crystal display device according to the eleventh embodiment of the present invention, as compared to the previously described liquid crystal display device according to the fifth embodiment of the present invention shown in FIG. 10, further includes the common voltage generator 102 to generate a common voltage, and the common voltage delay restrictor 200 to prevent a common voltage delay phenomenon. Other configurations of the present embodiment are identical to those of the fifth embodiment and the common voltage delay restrictor 200 is identical to that of FIG. 13.

### Twelfth Embodiment

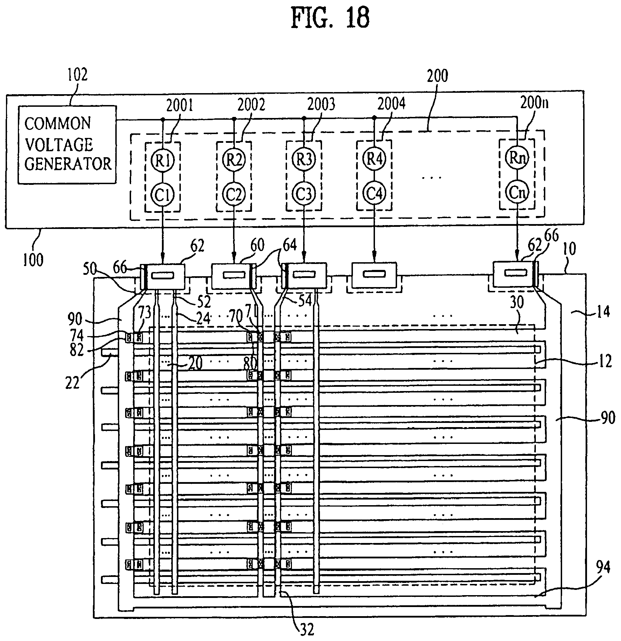

FIG. 18 is a plan view illustrating an important part of a liquid crystal display device according to a twelfth embodiment of the present invention.

As shown in FIG. 18, the liquid crystal display device according to the twelfth embodiment of the present invention, as compared to the previously described liquid crystal display device according to the sixth embodiment of the present invention shown in FIG. 11, further includes the common voltage generator 102 to generate a common voltage, and the common voltage delay restrictor 200 to prevent a common voltage delay phenomenon. Other configurations of the present embodiment are identical to those of the sixth embodiment and the common voltage delay restrictor 200 is identical to that of FIG. 13.

### Thirteenth Embodiment

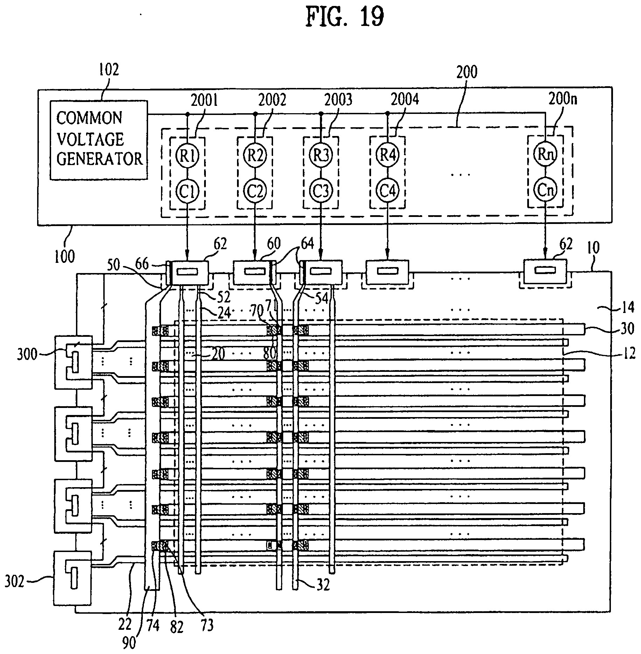

FIG. 19 is a plan view illustrating an important part of a liquid crystal display device according to a thirteenth embodiment of the present invention.

As shown in FIG. 19, the liquid crystal display device according to the thirteenth embodiment of the present invention, as compared to the previously described liquid crystal display device according to the seventh embodiment of the present invention shown in FIG. 13, further includes gate driver ICs 302 and a LOG-type signal line group 300 connected to each gate driver IC 302, which are formed in the display area 14.

The LOG type signal line group 300 is made of a gate metal layer in the same manner as the gate lines 22. A resistance value of the LOG type signal line group 300 is proportional to a line length and therefore, exhibits a signal delay as the LOG type signal line group 300 is more distant from the PCB. However, as shown in FIG. 19, when the plurality of delay preventing patterns 2001 to 200n are provided to correspond to the respective first and second data driver ICs 60 and 62 so as to achieve uniform common voltage supply, improved display quality can be accomplished. The plurality of delay preventing patterns 2001 to 200n have the same functions and effects, as described with reference to FIG. 13, and thus, a description thereof will be omitted.

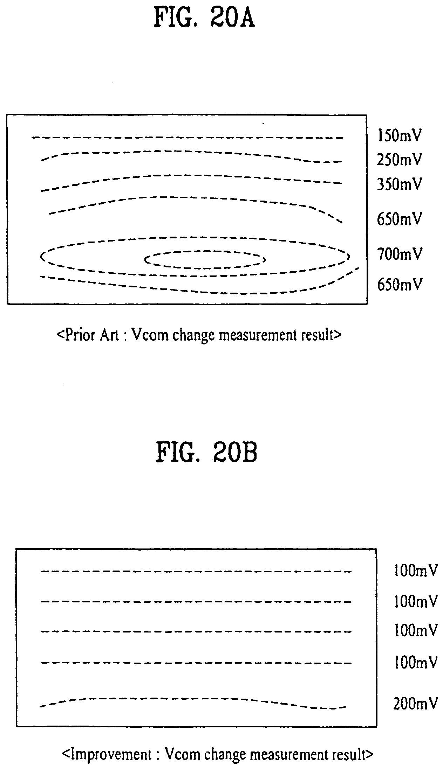

FIG. 20A is a view illustrating common voltage distribution within a conventional display panel, and FIG. 20B is a view illustrating common voltage distribution in the liquid crystal display device according to the present invention.

As shown in FIGs. 20A and 20B, the liquid crystal display device according to the embodiments of the present invention can achieve more uniform common voltage distribution than the prior art.

In particular, in the case of a wide panel having a screen ratio of 16 : 9 suitable for display of moving images, when a common voltage is supplied only via first common lines parallel to gate lines because the display panel is lengthened in a gate line direction, the first common lines undergo an increase in resistance and thus, exhibit serious uneven common voltage distribution due to a delay phenomenon depending on RC time constants. However, in the liquid crystal display device according to the embodiments of the present invention, a common voltage can be supplied via not only the first common lines parallel to the gate lines but also the second common lines parallel to the data lines, achieving a remarkable improvement in uniformity of common voltage distribution.

Further, the common voltage can be applied to the respective data driver ICs, achieving uniform common voltage distribution and preventing a crosstalk phenomenon.

Furthermore, the common lines formed vertically and horizontally can prevent wire brakeage failure thereof.

## Claims

1. A liquid crystal display device comprising:
a display panel (10) including a display area (12) and a non-display area (14) surrounding the display area (12);
a plurality of gate lines (22) and data lines (24) arranged in the display area (12) to intersect each other with a gate insulating layer therebetween, so as to define a plurality of pixel regions (20);
a plurality of first common lines (30) provided between the neighboring gate lines (22) and arranged in a same layer as and parallel to the gate lines (22);
a plurality of second common lines (32) provided between the neighboring data lines (24) and arranged in a same layer as and parallel to the data lines (24);
thin-film transistors (21) formed at respective intersections of the gate lines (22) and the data lines (24);
a protective film formed over the thin-film transistors (21), the gate lines (22),
the data lines (24), the first common lines (30) and the second common lines (32);
a pixel electrode (29) and a common electrode (31) formed on the protective film in each pixel region (20), the pixel electrode (29) and the common electrode (31) disposed in the same layer;
wherein each pixel electrode (29) is connected to a corresponding thin film transistor (21), and
the second common lines (32) are electrically connected to the first common lines (30);
**characterized in that**
the first common lines (30) comprise common line branches (33) branching from the first common lines (30) and extending into the pixel regions (20), wherein in each pixel region (20) a respective first common line (30) and a respective second common line (32) are electrically connected to each other in a manner that in an overlap region between a common line branch (33) and the common electrode (31) a contact hole (72b) is formed for connecting the common electrode (31) with the first common line (32), and that in an overlap region between a second common line (32) and the common electrode (31) a contact hole (72a) is formed for connecting the common electrode (31) with the second common line (30).

2. The liquid crystal display device according to claim 1, wherein each first common line (30) has a first contact hole (70) in the vicinity of an intersection of the first and second common lines (30, 32), and each second common line (32) has a second contact hole (71) at the intersection of the first and second common lines (30, 32), and the first and second common lines (30, 32) are electrically connected to each other by a first connecting pattern (80) through the first and second contact holes (70, 71), the first connecting pattern (80) being formed of the same layer as the pixel electrodes (29).

3. The liquid crystal display device according to claim 1, **characterized by** further comprising:
a plurality of data pad portions (50) at one side of two opposite sides of the non-display area (14), and including data pad lines (52) connected to the data lines (24) and common pad lines (54) connected to the second common lines (32), the plurality of data pad portions (50) are linearly arranged;
first data driver ICs (60) on the respective data pad portions (50) except for a first and a last data pad portion (50) of the plurality of data pad portions linearly arranged; and
second data driver ICs (62) on the respective first and last data pad portion of the plurality of data pad portions linearly arranged, respectively,
wherein at least one of the first data driver ICs (60) includes at least one first common voltage input terminal (64) for supplying a common voltage to at least one second common line (32) via the common pad line (54).

4. The liquid crystal display device according to claim 1, further comprising:
a second common line connecting pattern (92) provided on the non-display area (14) between the plurality of data pad portions (50) and the display area (12), and connecting the common pad lines (54) and the second common lines (32) to each other.

5. The liquid crystal display device according to claim 1, further comprising:
at least one second common voltage input terminal (66) provided in at least one of the second data driver ICs (62) for supplying the common voltage to the plurality of first common lines (30);
at least one first common line connecting pattern (90) arranged parallel to the data lines (24) in the non-display area (14) for supplying the common voltage to the plurality of first common lines (30).

6. The liquid crystal display device according to claim 5, wherein the data pad lines (52), the common pad lines (54), the second common lines (32), and the first common line connecting pattern (90) are formed of the same layer as the data lines (24).

7. The liquid crystal display device according to claim 5, wherein each first common line (30) and the first common line connecting pattern (90) are electrically connected to each other by a second connecting pattern (82) through a third contact hole (73) exposing a part of the first common line (30) and a fourth contact hole exposing a part of the first common line connecting pattern (90), the second connecting pattern (82) being formed of the same layer as the pixel electrodes (29).

8. The liquid crystal display device according to claim 4, wherein the first common lines (30) and the second common line connecting pattern (92) are formed of the same layer as the gate lines (22).

9. The liquid crystal display device according to claim 4,
wherein each second common line (32) and the second common line connecting pattern (92) are electrically connected to each other by a third connecting pattern (83) through a fifth contact hole exposing a part of the second common line (32) and a sixth contact hole exposing a part of the second common line connecting pattern (92), the third connecting pattern (83) being formed of the same layer as the pixel electrodes (29), and
wherein each common pad line (54) and the second common line connecting pattern (92) are electrically connected to each other by a fourth connecting pattern (84) through a seventh contact hole exposing a part of the common pad line (54) and an eighth contact hole exposing a part of the second common line connecting pattern (92), the fourth connecting pattern (84) being formed of the same layer as the pixel electrodes (29).

10. The liquid crystal display device according to claim 4, wherein the second common line connecting pattern (92) includes a plurality of island-shaped second common line connecting patterns, each arranged between the data driver ICs (60, 62) and connected to the common pad lines (54) provided in the two neighboring first driver ICs (60), or at least two island-shaped second common line connecting patterns (92) arranged at each data driver IC and each connecting one common pad line (54) and the at least two second common lines (32).

11. The liquid crystal display device according to claim 4, wherein a semiconductor layer (23) is interposed between the second common line connecting pattern (92) and the data lines (24) at a region where the second common line connecting pattern (92) and each data line (24) overlap each other.

12. The liquid crystal display device according to claim 11, wherein a portion of each data line (24) overlapped with the second common line connecting pattern (92) has a greater line width than a line width of the remaining portion of the data line (24), and a portion of the second common line connecting pattern (92) overlapped with the data line (24) has a smaller line width than a line width of the remaining portion of the second common line connecting pattern (92).

13. The liquid crystal display device according to claim 5, further comprising:
a third common line connecting pattern (94) provided in the non-display area (14) at the other of the two opposite sides of the non display area (14) and electrically connecting the second common lines (32) and the first common line connecting pattern (90).

14. The liquid crystal display device according to claim 13, wherein the third common line connecting pattern (94) has a dual layer structure consisting of a first pattern (94a) formed of the same layer as the data lines (24) and a second pattern (94b) formed of the same layer as the gate lines (22) and electrically connected to the first pattern (94a).

15. The liquid crystal display device according to claim 1, further comprising:
a common voltage delay restrictor (200) to supply common voltage control signals to the first and second common lines (30, 32) so as to prevent a common voltage delay phenomenon.

16. The liquid crystal display device according to claim 15, wherein the common voltage delay restrictor (200) includes a plurality of delay preventing patterns (2001-200n), and each delay preventing pattern (2001-200n) has at least one resistor (R) and at least one capacitor (C) having different resistance and capacitance values, respectively, from those of the other delay preventing patterns (2001-200n).

17. The liquid crystal display device according to claim 16, wherein resistance and capacitance values of the resistor (R) and the capacitor (C) respectively included in the respective delay preventing patterns (2001-200n) are set according to an area of the display panel or a length of the voltage supply lines.

18. The liquid crystal display device according to claim 16, wherein at least one of the plurality of delay preventing patterns (2001-200n) is connected to the respective first and second data driver ICs (60, 62), to supply at least one common voltage control signal to the respective first and second data driver ICs (60, 62).

## Patentansprüche

1. Flüssigkristallanzeigevorrichtung, die Folgendes umfasst:
eine Anzeigetafel (10), die einen Anzeigebereich (12) und einen Nichtanzeigebereich (14), der den Anzeigebereich (12) umgibt, enthält;
mehrere Gate-Leitungen (22) und Datenleitungen (24), die in dem Anzeigebereich (12) angeordnet sind, so dass sie sich über eine dazwischen befindliche Gate-Isolierschicht schneiden, um mehrere Pixelbereiche (20) zu definieren;
mehrere erste gemeinsame Leitungen (30), die zwischen benachbarten Gate-Leitungen (22) vorgesehen sind und in derselben Schicht wie die und parallel zu den Gate-Leitungen (22) angeordnet sind;
mehrere zweite gemeinsame Leitungen (32), die zwischen den benachbarten Datenleitungen (24) vorgesehen sind und in derselben Schicht wie die und parallel zu den Datenleitungen (24) angeordnet sind;
Dünnschichttransistoren (21), die an den jeweiligen Schnittpunkten der Gate-Leitungen (22) und der Datenleitungen (24) ausgebildet sind;
einen Schutzfilm, der über den Dünnschichttransistoren (21), den Gate-Leitungen (22), den Datenleitungen (24), den ersten gemeinsamen Leitungen (30) und den zweiten gemeinsamen Leitungen (32) ausgebildet ist;
eine Pixelelektrode (29) und eine gemeinsame Elektrode (31), die auf dem Schutzfilm in jedem Pixelbereich (20) ausgebildet sind, wobei die Pixelelektrode (29) und die gemeinsame Elektrode (31) in derselben Schicht angeordnet sind;
wobei jede Pixelelektrode (29) mit einem entsprechenden Dünnschichttransistor (21) verbunden ist; und
die zweiten gemeinsamen Leitungen (32) mit den ersten gemeinsamen Leitungen (30) elektrisch verbunden sind;
**dadurch gekennzeichnet, dass**
die ersten gemeinsamen Leitungen (30) gemeinsame Leitungszweige (33), die von den ersten gemeinsamen Leitungen (30) abzweigen und sich in die Pixelbereiche (20) erstrecken, umfassen, wobei in jedem Pixelbereich (20) eine jeweilige erste gemeinsame Leitung (30) und eine jeweilige zweite gemeinsame Leitung (32) in der Weise elektrisch miteinander verbunden sind, dass in einem Überlappungsbereich zwischen einem gemeinsamen Leitungszweig (33) und der gemeinsamen Elektrode (31) ein Kontaktloch (72b) zum Verbinden der gemeinsamen Elektrode (31) mit der ersten gemeinsamen Leitung (32) ausgebildet ist und dass in einem Überlappungsbereich zwischen einer zweiten gemeinsamen Leitung (32) und der gemeinsamen Elektrode (31) ein Kontaktloch (72a) zum Verbinden der gemeinsamen Elektrode (31) mit der zweiten gemeinsamen Leitung (30) ausgebildet ist.

2. Flüssigkristallanzeigevorrichtung nach Anspruch 1, wobei jede erste gemeinsame Leitung (30) ein erstes Kontaktloch (70) in der Nähe eines Schnittpunkts der ersten und der zweiten gemeinsamen Leitung (30, 32) aufweist und jede zweite gemeinsame Leitung (32) ein zweites Kontaktloch (71) an dem Schnittpunkt der ersten und der zweiten gemeinsamen Leitung (30, 32) aufweist und die erste und die zweite gemeinsame Leitung (30, 32) durch ein erstes Verbindungsmuster (80) durch das erste und das zweite Kontaktloch (70, 71) elektrisch miteinander verbunden sind, wobei das erste Verbindungsmuster (80) aus derselben Schicht wie die Pixelelektroden (29) ausgebildet ist.

3. Flüssigkristallanzeigevorrichtung nach Anspruch 1, **dadurch gekennzeichnet, dass** sie ferner Folgendes umfasst:
mehrere Daten-Anschlussflächenabschnitte (50) auf einer von zwei gegenüberliegenden Seiten des Nichtanzeigebereichs (14), Daten-Anschlussflächenleitungen (52), die mit den Datenleitungen (24) verbunden sind, und gemeinsame Anschlussflächenleitungen (54), die mit den zweiten gemeinsamen Leitungen (32) verbunden sind, wobei die mehreren Daten-Anschlussflächenabschnitte (50) geradlinig angeordnet sind;
erste Datentreiber-ICs (60) auf den jeweiligen Daten-Anschlussflächenabschnitten (50) mit Ausnahme eines ersten und eines letzten Daten-Anschlussflächenabschnitts (50) der mehreren geradlinig angeordneten Daten-Anschlussflächenabschnitte; und
zweite Datentreiber-ICs (62) auf dem jeweils ersten und letzten Daten-Anschlussflächenabschnitt der mehreren geradlinig angeordneten Daten-Anschlussflächenabschnitte,
wobei wenigstens eine der ersten Datentreiber-ICs (60) wenigstens einen ersten Eingangsanschluss (64) für eine gemeinsame Spannung zum Zuführen einer gemeinsamen Spannung über die gemeinsame Anschlussflächenleitung (54) zu wenigstens einer zweiten gemeinsamen Leitung (32) enthält.

4. Flüssigkristallanzeigevorrichtung nach Anspruch 1, die ferner Folgendes umfasst:
ein zweites gemeinsames Leitungsverbindungsmuster (92), das in dem Nichtanzeigebereich (14) zwischen den mehreren Daten-Anschlussflächenabschnitten (50) und dem Anzeigebereich (12) vorgesehen ist und die gemeinsamen Anschlussflächenleitungen (54) und die zweiten gemeinsamen Leitungen (32) miteinander verbindet.

5. Flüssigkristallanzeigevorrichtung nach Anspruch 1, die ferner Folgendes umfasst:
wenigstens einen zweiten Eingangsanschluss (66) für eine gemeinsame Spannung, der in wenigstens einer der zweiten Datentreiber-ICs (62) vorgesehen ist, zum Zuführen der gemeinsamen Spannung zu den mehreren ersten gemeinsamen Leitungen (30);
wenigstens ein erstes gemeinsames Leitungsverbindungsmuster (90), das in dem Nichtanzeigebereich (14) parallel zu den Datenleitungen (24) angeordnet ist, zum Zuführen der gemeinsamen Spannung zu den mehreren ersten gemeinsamen Leitungen (30).

6. Flüssigkristallanzeigevorrichtung nach Anspruch 5, wobei die Daten-Anschlussflächenleitungen (52), die gemeinsamen Anschlussflächenleitungen (54), die zweiten gemeinsamen Leitungen (32) und das erste gemeinsame Leitungsverbindungsmuster (90) aus derselben Schicht wie die Datenleitungen (24) ausgebildet sind.

7. Flüssigkristallanzeigevorrichtung nach Anspruch 5, wobei jede erste gemeinsame Leitung (30) und das erste gemeinsame Leitungsverbindungsmuster (90) durch ein zweites Verbindungsmuster (82) durch ein drittes Kontaktloch (73), das einen Teil der ersten gemeinsamen Leitung (30) freilegt, und ein viertes Kontaktloch, das einen Teil des ersten gemeinsamen Leitungsverbindungsmusters (90) freilegt, elektrisch miteinander verbunden sind, wobei das zweite Verbindungsmuster (82) aus derselben Schicht wie die Pixelelektroden (29) ausgebildet ist.

8. Flüssigkristallanzeigevorrichtung nach Anspruch 4, wobei die ersten gemeinsamen Leitungen (30) und das zweite gemeinsame Leitungsverbindungsmuster (92) aus derselben Schicht wie die Gate-Leitungen (22) ausgebildet sind.

9. Flüssigkristallanzeigevorrichtung nach Anspruch 4,
wobei jede zweite gemeinsame Leitung (32) und das zweite gemeinsame Leitungsverbindungsmuster (92) durch ein drittes Verbindungsmuster (83) durch ein fünftes Kontaktloch, das einen Teil der zweiten gemeinsamen Leitung (32) freilegt, und ein sechstes Kontaktloch, das einen Teil des zweiten gemeinsamen Leitungsverbindungsmusters (92) freilegt, elektrisch miteinander verbunden sind, wobei das dritte Verbindungsmuster (83) aus derselben Schicht wie die Pixelelektroden (29) ausgebildet ist, und
wobei jede gemeinsame Anschlussflächenleitung (54) und das zweite gemeinsame Leitungsverbindungsmuster (92) durch ein viertes Verbindungsmuster (84) durch ein siebentes Kontaktloch, das einen Teil der gemeinsamen Anschlussflächenleitung (54) freilegt, und ein achtes Kontaktloch, das einen Teil des zweiten gemeinsamen Leitungsverbindungsmuster (92) freilegt, elektrisch miteinander verbunden sind, wobei das vierte Verbindungsmuster (84) aus derselben Schicht wie die Pixelelektroden (29) ausgebildet ist.

10. Flüssigkristallanzeigevorrichtung nach Anspruch 4, wobei das zweite gemeinsame Leitungsverbindungsmuster (92) mehrere inselförmige zweite gemeinsame Leitungsverbindungsmuster, wobei jedes zwischen den Datentreiber-ICs (60, 62) angeordnet ist und mit den in den zwei benachbarten ersten Treiber-ICs (60) vorgesehenen gemeinsamen Anschlussflächenleitungen (54) verbunden ist, oder wenigstens zwei inselförmige zweite gemeinsame Leitungsverbindungsmuster (92), die an jeder Datentreiber-IC angeordnet sind und wobei jede eine gemeinsame Anschlussflächenleitung (54) und die wenigstens zwei zweiten gemeinsamen Leitungen (32) verbindet, enthält.

11. Flüssigkristallanzeigevorrichtung nach Anspruch 4, wobei eine Halbleiterschicht (23) in einem Bereich, wo sich das zweite gemeinsame Leitungsverbindungsmuster (92) und jede Datenleitung (24) einander überlappen, zwischen dem zweiten gemeinsamen Leitungsverbindungsmuster (92) und den Datenleitungen (24) angeordnet ist.

12. Flüssigkristallanzeigevorrichtung nach Anspruch 11, wobei ein Abschnitt jeder Datenleitung (24), der sich mit dem zweiten gemeinsamen Leitungsverbindungsmuster (92) überlappt, eine größere Leitungsbreite als eine Leitungsbreite des verbleibenden Abschnitts der Datenleitung (24) aufweist, und ein Abschnitt des zweiten gemeinsamen Leitungsverbindungsmusters (92), der sich mit der Datenleitung (24) überlappt, eine kleinere Leitungsbreite als eine Leitungsbreite des verbleibenden Abschnitts des zweiten gemeinsamen Leitungsverbindungsmusters (92) aufweist.

13. Flüssigkristallanzeigevorrichtung nach Anspruch 5, die ferner umfasst:
ein drittes gemeinsames Leitungsverbindungsmuster (94), das in dem Nichtanzeigebereich (14) auf der anderen der beiden gegenüberliegenden Seiten des Nichtanzeigebereichs (14) vorgesehen ist und das die zweiten gemeinsamen Leitungen (32) und das erste gemeinsame Leitungsverbindungsmuster (90) elektrisch verbindet.

14. Flüssigkristallanzeigevorrichtung nach Anspruch 13, wobei das dritte gemeinsame Leitungsverbindungsmuster (94) eine Zweischichtstruktur aufweist, die aus einem ersten Muster (94a), das aus derselben Schicht wie die Datenleitungen (24) ausgebildet ist, und einem zweiten Muster (94b), das aus derselben Schicht wie die Gate-Leitungen (42) ausgebildet ist und mit dem ersten Muster (94a) elektrisch verbunden ist, besteht.

15. Flüssigkristallanzeigevorrichtung nach Anspruch 1, die ferner umfasst:
einen Verzögerungsbegrenzer (200) der gemeinsamen Spannung, um der ersten und der zweiten gemeinsamen Leitung (30, 32) Steuersignale für die gemeinsame Spannung zuzuführen, um ein Verzögerungsphänomen der gemeinsamen Spannung zu verhindern.

16. Flüssigkristallanzeigevorrichtung nach Anspruch 15, wobei der Verzögerungsbegrenzer (200) der gemeinsamen Spannung mehrere Verzögerungsverhinderungsmuster (2001-200n) enthält und jedes Verzögerungsverhinderungsmuster (2001-200n) wenigstens einen Widerstand (R) und wenigstens einen Kondensator (C) aufweist, die Widerstands- bzw. Kapazitätswerte aufweisen, die von jenen der anderen Verzögerungsverhinderungsmuster (2001-200n) verschieden sind.

17. Flüssigkristallanzeigevorrichtung nach Anspruch 16, wobei die Widerstands- und Kapazitätswerte des Widerstands (R) bzw. des Kondensators (C), die in den jeweiligen Verzögerungsverhinderungsmustern (2001-200n) enthalten sind, gemäß einer Fläche der Anzeigetafel oder einer Länge der Spannungsversorgungsleitungen festgelegt sind.

18. Flüssigkristallanzeigevorrichtung nach Anspruch 16, wobei wenigstens eines der mehreren Verzögerungsverhinderungsmuster (2001-200n) mit den jeweiligen ersten und zweiten Datentreiber-ICs (60, 62) verbunden ist, um wenigstens ein Steuersignal für die gemeinsame Spannung den jeweiligen ersten und zweiten Datentreiber-ICs (60, 62) zu-zuführten.

## Revendications

1. Dispositif d'affichage à cristaux liquides comprenant
un panneau d'affichage (10) comprenant une zone d'affichage (12) et une zone de non-affichage (14) entourant la zone d'affichage (12) ;
une pluralité de lignes de grille (22) et de lignes de données (24) agencées dans la zone d'affichage (12) pour se croiser, avec une couche d'isolation de grille entre elles, de manière à définir une pluralité de régions de pixel (20) ;
une pluralité de premières lignes communes (30) prévues entre les lignes de grille voisines (22) et agencées dans une même couche que les lignes de grille (22) et parallèlement à celles-ci ;
une pluralité de deuxièmes lignes communes (32) prévues entre les lignes de données voisines (24) et agencées dans une même couche que les lignes de données (24) et parallèlement à celles-ci ;
des transistors de film mince (21) constitués à des intersections respectives des lignes de grille (22) et des lignes de données (24) ;
un film protecteur constitué sur les transistors de film mince (21), les lignes de grille (22), les lignes de données (24), les premières lignes communes (30) et les deuxièmes lignes communes (32) ;
une électrode de pixel (29) et une électrode commune (31) constituées sur le film protecteur dans chaque région de pixel (20), l'électrode de pixel (29) et l'électrode commune (31) étant disposées dans la même couche ;
dans lequel chaque électrode de pixel (29) est reliée à un transistor de film mince (21) correspondant, et
les deuxièmes lignes communes (32) sont reliées électriquement aux premières lignes communes (30) ;
**caractérisé en ce que**
les premières lignes communes (30) comprennent des branches de lignes communes (33) se ramifiant des premières lignes communes (30) et s'étendant dans les régions de pixel (20), dans lequel, dans chaque région de pixel (20), une première ligne commune respective (30) et une deuxième ligne commune respective (32) sont reliées électriquement l'une à l'autre de telle manière que, dans une région de chevauchement entre une branche de lignes communes (33) et l'électrode commune (31), un trou de contact (72b) soit constitué pour relier l'électrode commune (31) à la première ligne commune (32), et, dans une région de chevauchement entre une deuxième ligne commune (32) et l'électrode commune (31), un trou de contact (72a) soit constitué pour relier l'électrode commune (31) à la deuxième ligne commune (30).

2. Dispositif d'affichage à cristaux liquides selon la revendication 1, dans lequel chaque première ligne commune (30) comporte un premier trou de contact (70) à proximité d'une intersection des première et deuxième lignes communes (30, 32), et chaque deuxième ligne commune (32) comporte un deuxième trou de contact (71) à l'intersection des première et deuxième lignes communes (30, 32), et les première et deuxième lignes communes (30, 32) sont reliées électriquement l'une à l'autre par un premier motif de liaison (80) à travers les premier et deuxième trous de contact (70, 71), le premier motif de liaison (80) étant constitué de la même couche que les électrodes de pixel (29).

3. Dispositif d'affichage à cristaux liquides selon la revendication 1, **caractérisé en ce qu'**il comprend en outre :
une pluralité de portions de plots de données (50) à un côté de deux côtés opposés de la zone de non-affichage (14), et comprenant des lignes de plots de données (52) reliées aux lignes de données (24) et à des lignes de plots communes (54) reliées aux deuxièmes lignes communes (32), la pluralité de portions de plots de données (50) étant agencées linéairement ;
des premiers circuits intégrés d'attaque de données (60) sur les portions de plots de données (50) respectives à l'exception de première et dernière portions de plots de données (50) de la pluralité de portions de plots de données agencées linéairement ; et
des circuits intégrés d'attaque de données (62) sur les première et dernière portions de plots de données respectives de la pluralité de portions de plots de données agencées linéairement, respectivement,
dans lequel au moins l'un des premiers circuits intégrés d'attaque de données (60) comprend au moins une première borne d'entrée de tension commune (64) pour fournir une tension commune à au moins une deuxième ligne commune (32) par l'intermédiaire de la ligne de plots commune (54).

4. Dispositif d'affichage à cristaux liquides selon la revendication 1, comprenant en outre :
un deuxième motif de liaison de lignes communes (92) prévu sur la zone de non-affichage (14) entre la pluralité de portions de plots de données (50) et la zone d'affichage (12), et la liaison des lignes de plots communes (54) aux deuxièmes lignes communes (32).

5. Dispositif d'affichage à cristaux liquides selon la revendication 1, comprenant en outre :
au moins une deuxième borne d'entrée de tension commune (66) prévue dans au moins l'un des deuxièmes circuits intégrés d'attaque de données (62) pour fournir la tension commune à la pluralité de premières lignes communes (30) ;
au moins un premier motif de liaison de lignes communes (90) agencé parallèlement aux lignes de données (24) dans la zone de non-affichage (14) pour fournir la tension commune à la pluralité de premières lignes communes (30).

6. Dispositif d'affichage à cristaux liquides selon la revendication 5, dans lequel les lignes de plots de données (52), les lignes de plots communes (54), les deuxièmes lignes communes (32), et le premier motif de liaison de lignes communes (90) sont constitués de la même couche que les lignes de données (24).

7. Dispositif d'affichage à cristaux liquides selon la revendication 5, dans lequel chaque première ligne commune (30) et le premier motif de liaison de lignes communes (90) sont reliés électriquement par un deuxième motif de liaison (82) à travers un troisième trou de contact (73) exposant une partie de la première ligne commune (30) et un quatrième trou de contact exposant une partie du premier motif de liaison de lignes communes (90), le deuxième motif de liaison (82) étant constitué de la même couche que les électrodes de pixel (29).

8. Dispositif d'affichage à cristaux liquides selon la revendication 4, dans lequel les premières lignes communes (30) et le deuxième motif de liaison de lignes communes (92) sont constitués de la même couche que les lignes de grille (22).

9. Dispositif d'affichage à cristaux liquides selon la revendication 4,
dans lequel chaque deuxième ligne commune (32) et le deuxième motif de liaison de lignes communes (92) sont reliés électriquement par un troisième motif de liaison (83) à travers un cinquième trou de contact exposant une partie de la deuxième ligne commune (32) et un sixième trou de contact exposant une partie du deuxième motif de liaison de lignes communes (92), le troisième motif de liaison (83) étant constitué de la même couche que les électrodes de pixel (29), et
dans lequel chaque ligne de plots commune (54) et le deuxième motif de liaison de lignes communes (92) sont reliés électriquement par un quatrième motif de liaison (84) à travers un septième trou de contact exposant une partie de la ligne de plots commune (54) et un huitième trou de contact exposant une partie du deuxième motif de liaison de lignes communes (92), le quatrième motif de liaison (84) étant constitué de la même couche que les électrodes de pixel (29).

10. Dispositif d'affichage à cristaux liquides selon la revendication 4, dans lequel le deuxième motif de liaison de lignes communes (92) comprend une pluralité de deuxièmes motifs de liaison de lignes communes en forme d'îlots, chacun d'eux étant agencé entre les circuits intégrés d'attaque de données (60, 62) et relié aux lignes de plots communes (54) prévues dans les deux premiers circuits intégrés d'attaque (60) voisins, ou au moins deux deuxièmes motifs de liaison de lignes communes en forme d'îlots (92) agencés à chaque circuit intégré d'attaque de données et chacun d'eux reliant une ligne de plots commune (54) et les au moins deux deuxièmes lignes communes (32).

11. Dispositif d'affichage à cristaux liquides selon la revendication 4, dans lequel une couche semiconductrice (23) est interposée entre le deuxième motif de liaison de lignes communes (92) et les lignes de données (24) à une région dans laquelle le deuxième motif de liaison de lignes communes (92) et chaque ligne de données (24) se chevauchent.

12. Dispositif d'affichage à cristaux liquides selon la revendication 11, dans lequel une portion de chaque ligne de données (24) chevauchée par le deuxième motif de liaison de lignes communes (92) a une largeur de ligne supérieure à une largeur de ligne de la portion restante de la ligne de données (24), et une portion du deuxième motif de liaison de lignes communes (92) chevauchée par la ligne de données (24) a une largeur de ligne inférieure à une largeur de ligne de la portion restante du deuxième motif de liaison de lignes communes (92).

13. Dispositif d'affichage à cristaux liquides selon la revendication 5, comprenant en outre :
un troisième motif de liaison de lignes communes (94) prévu dans la zone de non-affichage (14) à l'autre des deux côtés opposés de la zone de non-affichage (14) et reliant électriquement les deuxièmes lignes communes (32) et le premier motif de liaison de lignes communes (90).

14. Dispositif d'affichage à cristaux liquides selon la revendication 13, dans lequel le troisième motif de liaison de lignes communes (94) comporte une structure à deux couches se composant d'un premier motif (94a) constitué de la même couche que les lignes de données (24) et un deuxième motif (94b) constitué de la même couche que les lignes de grille (22) et relié électriquement au premier motif (94a).

15. Dispositif d'affichage à cristaux liquides selon la revendication 1, comprenant en outre :
un dispositif de restriction de retard de tension commune (200) pour fournir des signaux de régulation de tension commune aux première et deuxième lignes communes (30, 32) de manière à empêcher un phénomène de retard de tension commune.

16. Dispositif d'affichage à cristaux liquides selon la revendication 15, dans lequel le dispositif de restriction de retard de tension commune (200) comprend une pluralité de motifs de prévention de retard (2001-200n), et chaque motif de prévention de retard (2001-200n) comprend au moins une résistance (R) et au moins un condensateur (C) ayant respectivement des valeurs de résistance et de capacité différentes de celles des autres motifs de prévention de retard (2001-200n).

17. Dispositif d'affichage à cristaux liquides selon la revendication 16, dans lequel des valeurs de résistance et de capacité de la résistance (R) et du condensateur (C) respectivement incluses dans les motifs de prévention de retard (2001-200n) respectifs sont réglées en fonction d'une superficie du panneau d'affichage ou d'une longueur des lignes d'alimentation de tension.

18. Dispositif d'affichage à cristaux liquides selon la revendication 16, dans lequel au moins l'un de la pluralité de motifs de prévention de retard (2001-200n) est relié aux premier et deuxième circuits intégrés d'attaque de données (60, 62) respectifs pour fournir au moins un signal de régulation de tension commune aux premier et deuxième circuits intégrés d'attaque de données (60, 62) respectifs.
